# EUROPEAN PATENT SPECIFICATION

(11) **EP 4 060 949 B1**
(45) Date of publication and mention of the grant of the patent: **11.11.2026**
(21) Application number: 20900209.6
(22) Date of filing: 29.09.2020
(51) Int. Cl.: H04L 45/18, H04L 41/06, H04L 45/02

(54) **METHOD FOR REDUCING ROUTING LOOPS, APPARATUS AND SYSTEM**
VERFAHREN ZUM REDUZIEREN VON ROUTING-SCHLEIFEN, GERÄT UND SYSTEM
PROCÉDÉ DE RÉDUCTION DE BOUCLES DE ROUTAGE, APPAREIL ET SYSTÈME ASSOCIÉS

(30) Priority: 10.12.2019 CN 201911260732
(43) Date of publication of application: 21.09.2022
(73) Proprietor: Huawei Technologies Co., Ltd., Shenzhen, Guangdong 518129 (CN)
(72) Inventor: ZHANG, Zhendong, Shenzhen, Guangdong 518129 (CN); ZHANG, Jiaqing, Shenzhen, Guangdong 518129 (CN); YAN, Gang, Shenzhen, Guangdong 518129 (CN)
(74) Representative: Epping - Hermann - Fischer
(86) International application number: PCT/CN2020/119036
(87) International publication number: WO 2021/114838

(56) References cited:
- CN-A- 103 634 212
- CN-A- 103 944 823
- CN-A- 106 411 729
- CN-A- 109 861 913
- CN-A- 109 962 846
- US-A1- 2005 195 835
- US-A1- 2019 312 770

## Description

### TECHNICAL FIELD

This application relates to the field of communications technologies, and in particular, to a routing loop reduction method and a network device.

### BACKGROUND

Dynamic routing protocols such as Intermediate System to Intermediate System (Intermediate system to Intermediate system, IS-IS), Open Shortest Path First (Open Shortest Path First, OSPF), and Border Gateway Protocol (Border Gateway Protocol, BGP) are widely used on live networks. Existing networking schemes usually relate to various mutual import scenarios such as mutual route import between IS-IS processes, mutual route import between OSPF processes, or mutual route import between OSPF and BGP. If a route prefix of a routing device that redistributes a route is improperly configured, a Layer 3 loop may occur on the route. Route redistribution means that a routing device advertises, in a current protocol domain (or a current process), a route in another protocol domain (or another process) in a routing table. In IS-IS and OSPF networking schemes, link state database (Link State DataBase, LSDB) information and routing information of each process are isolated from those of another process, and each process may run a different service. A plurality of OSPF processes or a plurality of IS-IS processes may be configured on one device to simulate a plurality of devices.

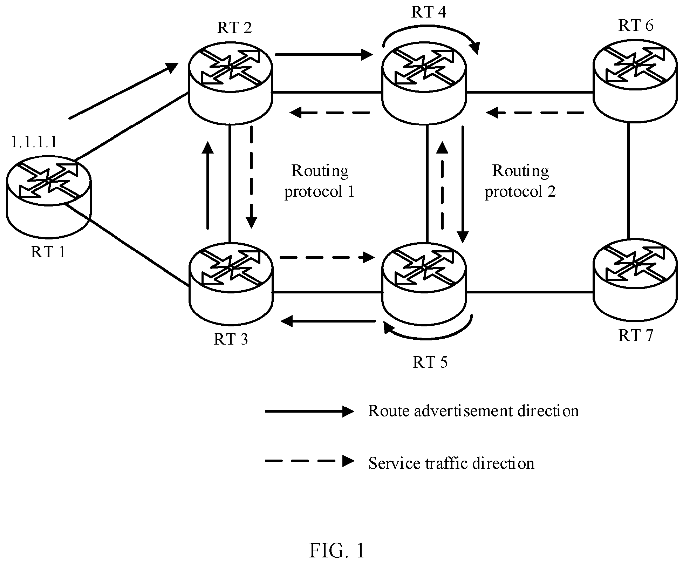

In a network environment shown in FIG. 1, a routing device RT 1 advertises a route, an RT 1, an RT 2, an RT 3, an RT 4, and an RT 5 run a routing protocol 1, and the RT 4, the RT 5, an RT 6, and an RT 7 run a routing protocol 2. On the devices RT 4 and RT 5, mutual import is performed between the routing protocol 1 and the routing protocol 2. There is a lack of a loop prevention mechanism between routing protocols (processes). To be specific, after the RT 5 learns of routing information through the routing protocol 2, the RT 5 redistributes the routing information to the routing protocol 1, and route prefix overlapping occurs in a protocol domain of the protocol 1. Therefore, the loop cannot be effectively avoided. In addition, when a loop failure occurs, a path tracing program (tracert) can display only related loop devices. The devices need to be logged in to one by one, to determine which device is a trigger source of the loop. Loop detection consumes a long time. In addition, a tracert operation can be performed only during occurrence of the loop. This brings difficulty for locating after the failure disappears.

US 2019/312770 A1 discloses a border router including at least one processor and at least one memory including computer program code. The at least one memory and the computer program code is configured to, with the at least one processor, cause the border router to: identify, in response to receiving a label mapping message from a network node, a backup border router as a hop in a backup path between a leaf node and a root node in a multicast network including an autonomous system, the label mapping message including a type-length-value; determine whether the backup border router is an originating border router having generated the label mapping message based on the type-length-value; and suppress mapping of the hop in the backup path in response to determining that the backup border router is the originating border router.

CN 109861913 A discloses a prefix identification notification method and device. The method is used for cross-network equipment of a cross-internal gateway protocol, the cross-network equipment is respectively accessed to a first network adopting a first protocol and a second network adopting a second protocol, wherein the first protocol and the second protocol are different internal gateway protocols.

### SUMMARY

Embodiments of this application provide routing loop reduction methods and network devices, to resolve a technical problem that loop failure locating and recovery are difficult and time-consuming. The invention is set out by the appended claims. In the following, parts of the description and drawings referring to embodiments which are not covered by the claims are not presented as embodiments of the invention, but as examples useful for understanding the invention.

According to a first aspect, an embodiment of this application provides a routing loop reduction method according to independent claim 1.

In a scenario of mutual import between a plurality of protocols in the conventional technology, if mutual import is performed between a first routing protocol and a second routing protocol, when a route in the first routing protocol is imported into the second routing protocol, a loop determining mechanism between protocols is usually inadequate to provide a proper method to prevent a loop failure in a scenario of mutual import between a plurality of processes or between a plurality of protocols. Based on this problem, it can be determined by analyzing the existing technology that, in the existing technology, route prefix overlapping may occur when mutual import is performed between protocols. In view of this, in a method provided in embodiments of this application, before advertising a route, a network device first determines, based on identifier information (a device identifier and/or a protocol identifier) carried by the route, whether a routing loop is caused, and if a risk exists, may directly give up advertising the route or generate alarm information to prompt that advertising the route may cause a routing loop, so that the network device can locate the routing loop at a location or a moment at which the routing loop is caused. This facilitates subsequent loop failure locating, to further shorten time for loop failure detection.

In a scenario to which this embodiment is applicable, alarm information (the alarm information may include information about a location at which a loop failure occurs, information about time when the loop failure occurs, and the like) may be sent in a plurality of manners. In a first manner, a routing device performs loop determining and obtains a determining result (the determining result may be that a routing loop exists or no routing loop exists). The determining result is recorded in log information and reported to an application layer, so that information such as a location and time at which the routing loop occurs can be determined based on the log information during loop failure detection, so as to quickly determine and resolve the loop failure. In a second manner, the scenario of mutual import between a plurality of protocols includes a network management device (or a routing device that is in this scenario and that is set to undertaking a function of the network management device) connected to each network device (in this embodiment, the network device may be a routing device). After determining that a routing loop exists, the routing device reports alarm information to the network management device, so that loop failure information can be directly determined in the network management device during subsequent loop failure detection.

In the foregoing embodiment, the network device may determine, separately based on two parameters: the source protocol identifier and the source device identifier, whether the routing loop exists, or may determine, based on a combination of the two parameters, whether the routing loop exists. The combination of the two parameters is used in a same manner of using the two parameters separately. When the two parameters are used in combination, it needs to be determined whether the source device identifier or the source protocol identifier is first used for routing loop determining. Other specific implementation of the solution of determining based on the two parameters is the same as the solution of determining based on one of the parameters, except for a sequence of determining based on the parameters. Based on this feature, the following mainly describes a method implementation when the two parameters are used separately.

According to an alternative provided for a better understanding, when it is determined, based on the source device identifier, that advertising the first route causes the routing loop, that the first network device determines, based on the identifier information, that advertising the first route to a second network device running the second routing protocol causes a routing loop includes: The first network device determines, based on a fact that the source device identifier includes a device identifier that is the same as a device identifier of the first network device, that advertising the first route to the second network device causes the routing loop.

A device identifier (the device identifier may be a router-ID in actual application) of a network device that advertises the first route in the plurality of protocols may be clearly determined based on the device identifier, so that one or more network devices that advertised the first route may be traced. When the device identifier is used to identify whether the routing loop occurs, an alarm may be performed by using the traced network device that advertised the first route, to determine information such as a location and time at which the loop occurs.

In an optional implementation, if the routing protocol to which the first route belongs is Open Shortest Path First OSPF, Border Gateway Protocol BGP, or Intermediate System to Intermediate System IS-IS, the source device identifier is a router identifier of the device that advertises the first route.

Further, in an optional implementation, specifically, routes are advertised in different manners based on different types of protocols, and therefore, identifier information is carried in different information based on different types of routing protocols. A specific implementation may be as follows: If the routing protocol to which the first route belongs is Open Shortest Path First OSPF, the identifier information is carried in a link-state advertisement LSA; if the routing protocol to which the first route belongs is Intermediate System to Intermediate System IS-IS, the identifier information is carried in a type-length-value TLV; or if the routing protocol to which the first route belongs is Border Gateway Protocol BGP, the identifier information is carried in a BGP update packet.

According to this application, when it is determined, based on the source protocol identifier, that advertising the first route causes the routing loop, that the first network device determines, based on the identifier information, that advertising the first route to a second network device running the second routing protocol causes a routing loop includes: The first network device determines, based on a fact that the source protocol identifier is the same as a protocol identifier of the second routing protocol run by the second network device and a route included in the second network device includes a route that has a same prefix as the first route, that advertising the first route to the second network device causes the routing loop.

In an optional implementation, when the identifier information is the source protocol identifier, because protocol identifiers are obtained in different manners in different types of protocols, in this embodiment, the source protocol identifier may be as follows: If the routing protocol to which the first route belongs is OSPF, the source protocol identifier is a router identifier corresponding to an OSPF process; if the routing protocol to which the first route belongs is IS-IS, the source protocol identifier is a router identifier corresponding to an IS-IS process; or if the first routing protocol is BGP, the source protocol identifier is an autonomous system AS number of the first routing protocol.

In an optional implementation, based on the source protocol identifier determined by the foregoing different types of protocols, a corresponding manner of carrying the source protocol identifier may be as follows: If the routing protocol to which the first route belongs is OSPF or IS-IS, the identifier information is carried in a tag attribute of the first route, or if the routing protocol to which the first route belongs is BGP, the identifier information is carried in a path attribute of an update packet.

According to a second aspect, a routing loop reduction method is provided as an example for a better understanding. The method includes: A first network device receives a first packet. The first packet carries identifier information and a first route, and the identifier information includes a source device identifier of a device that advertises the first route or a source protocol identifier of a routing protocol to which the first route belongs. The first network device runs a first process and a second process, and the first process is different from the second process. The first network device determines, based on the identifier information, that advertising the first route to a second network device running the second process causes a routing loop. In response to a fact that the first network device determines that advertising the first route to the second network device causes the routing loop, the first network device does not advertise the first route to the second network device, or the first network device reports alarm information. The alarm information indicates that the routing loop occurs when the first network device advertises the first route to the second network device.

In an optional implementation, that the first network device determines, based on the identifier information, that advertising the first route to a second network device running the second process causes a routing loop includes: The first network device determines, based on a fact that the source device identifier includes a device identifier that is the same as a device identifier of the first network device, that advertising the first route to the second network device causes the routing loop.

In an optional implementation, if the routing protocol to which the first route belongs is Open Shortest Path First OSPF or Intermediate System to Intermediate System IS-IS, the source device identifier is a router identifier of the device that advertises the first route.

In an optional implementation, if the routing protocol to which the first route belongs is Open Shortest Path First OSPF, the identifier information is carried in a link-state advertisement LSA; or if the routing protocol to which the first route belongs is Intermediate System to Intermediate System IS-IS, the identifier information is carried in a type-length-value TLV

In an optional implementation, that the first network device determines, based on the identifier information, that advertising the first route to a second network device running the second process causes a routing loop includes: The first network device determines, based on a fact that the source protocol identifier is the same as a protocol identifier corresponding to the second process run by the second network device and a route included in the second network device includes a route that has a same prefix as the first route, that advertising the first route to the second network device causes the routing loop.

In an optional implementation, if the routing protocol to which the first route belongs is OSPF, the source protocol identifier is a router identifier corresponding to an OSPF process; or if the routing protocol to which the first route belongs is IS-IS, the source protocol identifier is a router identifier corresponding to an IS-IS process.

In an optional implementation, if the routing protocol to which the first route belongs is OSPF or IS-IS, the identifier information is carried in a tag attribute of the first route.

A difference between the methods provided in the first aspect and the second aspect lies in that the method provided in the first aspect is specific to a scenario of mutual import between a plurality of protocols, and the method provided in the second aspect is specific to a scenario of mutual import between a plurality of processes. Specific implementation principles of the foregoing two methods are similar, and the two methods may overlap each other during specific implementation. Therefore, descriptions of the foregoing two methods may verify and illustrate each other. Certainly, for various detailed content of the method in the second aspect, refer to the content described in the first aspect. For ease of description, various detailed content of the method in the second aspect is not described herein again.

According to a third aspect, a network device according to independent claim 4 is provided.

In an optional implementation, if the routing protocol to which the first route belongs is Open Shortest Path First OSPF, Border Gateway Protocol BGP, or Intermediate System to Intermediate System IS-IS, the source device identifier is a router identifier of the device that advertises the first route.

In an optional implementation, if the routing protocol to which the first route belongs is Open Shortest Path First OSPF, the identifier information is carried in a link-state advertisement LSA; if the routing protocol to which the first route belongs is Intermediate System to Intermediate System IS-IS, the identifier information is carried in a type-length-value TLV; or if the routing protocol to which the first route belongs is Border Gateway Protocol BGP, the identifier information is carried in a BGP update packet.

According to this application, the processing unit is specifically configured to determine, based on a fact that the source protocol identifier is the same as a protocol identifier of the second routing protocol run by the second network device and a route included in the second network device includes a route that has a same prefix as the first route, that advertising the first route to the second network device causes the routing loop.

In an optional implementation, if the routing protocol to which the first route belongs is OSPF, the source protocol identifier is a router identifier corresponding to an OSPF process; if the routing protocol to which the first route belongs is IS-IS, the source protocol identifier is a router identifier corresponding to an IS-IS process; or if the first routing protocol is BGP, the source protocol identifier is an autonomous system AS number of the first routing protocol. In an optional implementation, if the routing protocol to which the first route belongs is OSPF or IS-IS, the identifier information is carried in a tag attribute of the first route; or if the routing protocol to which the first route belongs is BGP, the identifier information is carried in a path attribute of an update packet.

According to a fourth aspect, a network device is provided as an example for a better understanding. The network device includes a receiving unit and a processing unit. The receiving unit is configured to receive a first packet. The first packet carries identifier information and a first route, and the identifier information includes a source device identifier of a device that advertises the first route or a source protocol identifier of a routing protocol to which the first route belongs. The first network device runs a first process and a second process, and the first process is different from the second process. The processing unit is configured to: determine, based on the identifier information, that advertising the first route to a second network device running the second process causes a routing loop; and determine not to advertise the first route to the second network device; or report alarm information. The alarm information indicates that the routing loop occurs when the first network device advertises the first route to the second network device.

In an optional implementation, the processing unit is specifically configured to determine, based on a fact that the source device identifier includes a device identifier that is the same as a device identifier of the first network device, that advertising the first route to the second network device causes the routing loop.

In an optional implementation, if the routing protocol to which the first route belongs is Open Shortest Path First OSPF or Intermediate System to Intermediate System IS-IS, the source device identifier is a router identifier of the device that advertises the first route.

In an optional implementation, if the routing protocol to which the first route belongs is Open Shortest Path First OSPF, the identifier information is carried in a link-state advertisement LSA; or if the routing protocol to which the first route belongs is Intermediate System to Intermediate System IS-IS, the identifier information is carried in a type-length-value TLV

In an optional implementation, the processing unit is specifically configured to determine, based on a fact that the source protocol identifier is the same as a protocol identifier corresponding to the second process run by the second network device and a route included in the second network device includes a route that has a same prefix as the first route, that advertising the first route to the second network device causes the routing loop.

In an optional implementation, if the routing protocol to which the first route belongs is OSPF, the source protocol identifier is a router identifier corresponding to an OSPF process; or if the routing protocol to which the first route belongs is IS-IS, the source protocol identifier is a router identifier corresponding to an IS-IS process.

In an optional implementation, if the routing protocol to which the first route belongs is OSPF or IS-IS, the identifier information is carried in a tag attribute of the first route.

According to a fifth aspect, a routing loop reduction system is provided as an example for a better understanding. The system includes a first network device and a second network device. The first network device runs a first routing protocol and a second routing protocol, and the first routing protocol is different from the second routing protocol. The first network device is configured to: receive a first packet, where the first packet carries identifier information and a first route, and the identifier information includes a source device identifier of a device that advertises the first route or a source protocol identifier of a routing protocol to which the first route belongs; determine, based on the identifier information, that advertising the first route to the second network device running the second routing protocol causes a routing loop; and in response to a fact that the first network device determines that advertising the first route to the second network device causes the routing loop, skip advertising the first route to the second network device; or report alarm information, where the alarm information indicates that the routing loop occurs when the first network device advertises the first route to the second network device.

In an optional implementation, the system further includes:
a network management device, configured to receive the alarm information.

In this embodiment, the network management device may be a network management device that is connected to each routing device in this scenario but is independent of the routing device in this scenario. In this case, when sending the alarm information, the routing device sends the alarm information to the network management device.

Certainly, in this implementation, the network management device may alternatively be a routing device in this scenario that undertakes a function of the network management device. After determining that a routing loop exists, another routing device having no network management function reports alarm information to the routing device having the network management function.

The alarm information is reported, so that loop failure information can be directly determined on the network management device during loop failure detection after a loop failure occurs. This shortens a detection latency. According to a sixth aspect, a routing loop reduction system is provided as an example for a better understanding. The system includes a first network device and a second network device. The first network device runs a first process and a second process, and the first process is different from the second process.

The first network device is configured to: receive a first packet, where the first packet carries identifier information and a first route, and the identifier information includes a source device identifier of a device that advertises the first route or a source protocol identifier of a routing protocol to which the first route belongs; determine, based on the identifier information, that advertising the first route to the second network device running the second process causes a routing loop; and in response to a fact that the first network device determines that advertising the first route to the second network device causes the routing loop, skip advertising the first route to the second network device; or report alarm information, where the alarm information indicates that the routing loop occurs when the first network device advertises the first route to the second network device.

According to a seventh aspect, a routing loop reduction method is provided as an example for a better understanding. The method includes: A first network device adds identifier information to a first packet, and sends the first packet to a second network device. The first packet includes a first route. The identifier information includes an identifier of the first network device that advertises the first route or a source protocol identifier of a routing protocol to which the first route belongs, and the identifier information is used to indicate the second network device to determine, based on the identifier information, whether a loop occurs.

In an optional implementation, the first network device runs a first routing protocol and a second routing protocol, or the first network device runs a first process and a second process.

According to an eighth aspect, a routing loop reduction network device is provided as an example for a better understanding. The network device is configured to perform the method according to the seventh aspect or any possible implementation of the seventh aspect. Specifically, the network device includes a unit configured to perform the method according to the seventh aspect or any possible implementation of the seventh aspect.

According to a ninth aspect, a routing loop reduction network device is provided as an example for a better understanding. The network device includes a processor, a communications interface, and a memory. The memory may be configured to store program code. The processor is configured to invoke the program code in the memory to perform the method according to the seventh aspect or any possible implementation of the seventh aspect. For details, refer to detailed descriptions in the method example. Details are not described herein again.

According to a tenth aspect, a chip is provided as an example for a better understanding. The chip is coupled to a memory in an electronic device, so that the chip invokes, during running, program instructions stored in the memory, to implement the method according to any implementation of the first aspect or the second aspect.

According to an eleventh aspect, a computer-readable storage medium according to independent claim 5 is provided.

According to a twelfth aspect, an embodiment of this application provides a network device as an example for a better understanding. The network device includes a processor, a communications interface, and a memory. The memory may be configured to store program code. The processor is configured to invoke the program code in the memory to perform the method according to the first aspect, the second aspect, any possible implementation of the first aspect, or any possible implementation of the second aspect. For details, refer to detailed descriptions in the method example. Details are not described herein again.

### BRIEF DESCRIPTION OF DRAWINGS

FIG. 1 is a schematic diagram of a network environment architecture of mutual import between a plurality of protocols or between a plurality of processes in the conventional technology;
FIG. 2 is a schematic flowchart of a routing loop reduction method according to an embodiment of the present application;
FIG. 3 is a schematic diagram of an architecture of a network environment in which a method according to an embodiment of the present application is applied to mutual import between OSPF and IS-IS;
FIG. 4 is a schematic method flowchart of the scenario shown in FIG. 3 to which a method according to an embodiment of the present application is applied;
FIG. 5 is a schematic diagram of an architecture of a network environment in which a method according to an embodiment of the present application is applied to mutual import between BGP and IS-IS;
FIG. 6 is a schematic method flowchart of the scenario shown in FIG. 5 to which a method according to an embodiment of the present application is applied;
FIG. 7 is a schematic diagram of an architecture of a network environment in which a method according to an embodiment of the present application is applied to mutual import between OSPF and IS-IS;
FIG. 8 is a schematic method flowchart of the scenario shown in FIG. 7 to which a method according to an embodiment of the present application is applied;
FIG. 9 is a schematic flowchart of another routing loop reduction method according to an embodiment of the present application;
FIG. 10 is a schematic diagram of a structure of a network device according to an embodiment of the present application;
FIG. 11 is a schematic diagram of a structure of another network device according to an embodiment of the present application;
FIG. 12 is a schematic diagram of a structure of a network device according to an embodiment of the present application; and
FIG. 13 is a schematic diagram of a structure of a routing loop prevention system according to an embodiment of the present application.

### DESCRIPTION OF EMBODIMENTS

Based on analysis of the technical problems to be resolved in embodiments of this application, it can be determined that in a technology of mutual route import between a plurality of processes or between a plurality of protocols, a route prefix range is not controlled for a redistributed route, and therefore an overlap may exist in a route prefix of the redistributed route. As a result, service traffic forms a loop between two routing protocols. A loop prevention mechanism in a routing protocol is complete, but there is a lack of a loop prevention mechanism between routing protocols or processes. Therefore, a current technology of mutual route import between a plurality of processes or between a plurality of protocols cannot effectively prevent a routing loop failure that occurs in the technology of mutual route import between a plurality of processes or between a plurality of protocols. In addition, the routing loop failure is a network-level failure, and failure locating and recovery are difficult and time-consuming.

Based on the foregoing analysis of the technical problems, according to routing loop reduction methods provided in embodiments of this application, before advertising a route, a routing device determines, for the to-be-advertised route in a specific manner, whether a risk of a routing loop exists. If advertising the route causes a routing loop, the route is not advertised or alarm information is sent. The alarm information indicates that a routing loop is caused when the network device advertises a route to another network device.

The network device mentioned in methods disclosed in embodiments of the present invention may be a routing device in an application scenario of implementing the methods in the embodiments. The routing device may be used in a scenario of mutual route import between a plurality of protocols or between a plurality of processes in a plurality of networking solutions. A scenario to which the methods provided in embodiments of this application are applicable may be a scenario of interaction between a plurality of routing devices shown in FIG. 1. In the scenario shown in FIG. 1, some routing devices (for example, an RT 2, an RT 3, an RT 6, and an RT 7) run only one routing protocol, and some routing devices (for example, an RT 4 and an RT 5) run two or more different routing protocols. A scenario of mutual import between a plurality of protocols or between a plurality of processes described in the method in the embodiments occurs in the RT 4 and the RT 5. In the embodiments, a routing device determines, based on identifier information carried in a route, whether advertising the route causes a routing loop. For a redistributed route, identifier information may be directly obtained from a route. When the routing device serves as an original routing device to advertise a route, identifier information may be carried in the route in a preset manner. Therefore, in the routing devices in FIG. 1, when a scenario of mutual route import between protocols occurs between the RT 4 and the RT 5, routing loop detection can be implemented by using the methods provided in embodiments of this application.

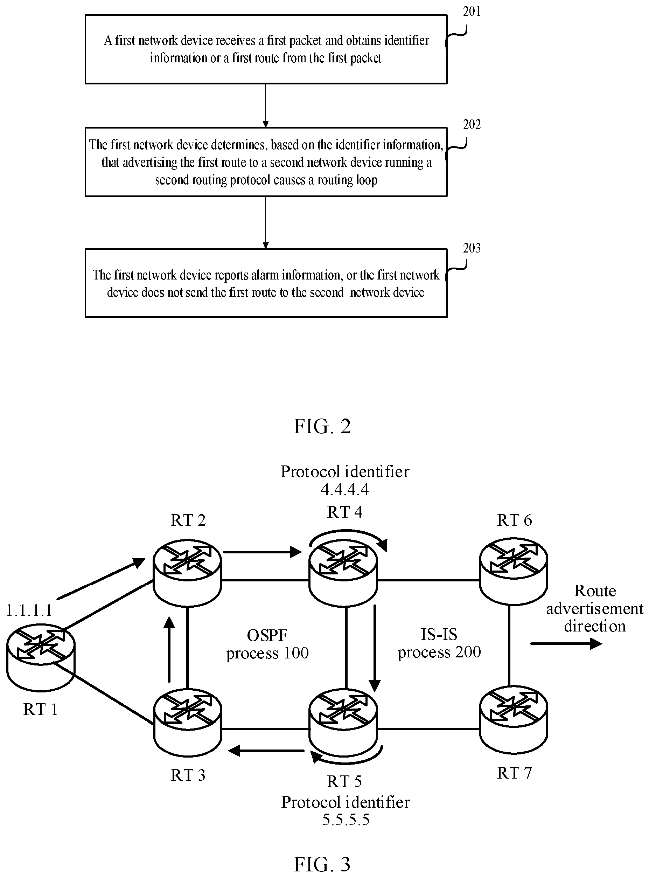

In view of the foregoing structure of the routing devices, the following describes in detail, with reference to the accompanying drawings, a routing loop reduction method provided in an embodiment of this application. The method may include the following steps (as shown in FIG. 2).

Step 201: A first network device receives a first packet.

The first packet carries identifier information and a first route, and the identifier information includes a source device identifier of a device that advertises the first route or a source protocol identifier of a routing protocol to which the first route belongs. The first network device runs a first routing protocol and a second routing protocol, and the first routing protocol is different from the second routing protocol.

The identifier information identifies the source device identifier of the device that advertises the first route or the protocol identifier of the routing protocol to which the first route belongs. In other words, the identifier information may be the source device identifier of the device that advertises the first route and the protocol identifier of the routing protocol to which the first route belongs, or may be either of the source device identifier of the device that advertises the first route or the protocol identifier of the routing protocol to which the first route belongs.

In this application, the routing protocol to which the first route belongs may be a routing protocol found in an IP routing table of a network device that advertises the first route this time. The source device identifier is a device identifier of the network device that advertises the first route this time and carries identifier information.

Step 202: The first network device determines, based on the identifier information, that advertising the first route to a second network device running the second routing protocol causes a routing loop.

In this embodiment, when the first route is advertised to the second network device running the second routing protocol (that is, the first network device imports the first route from the first routing protocol to the second routing protocol), it is determined, based on the identifier information corresponding to the first route, whether advertising the first route to the second network device running the second routing protocol causes the routing loop. In the foregoing embodiment, the network device may determine, based on the source protocol identifier or the source device identifier, whether the routing loop exists, or may determine, based on a combination of the source protocol identifier and the source device identifier, whether the routing loop exists. The combination of the two parameters is used in a same manner of using the two parameters separately. When the two parameters are used in combination, it needs to be determined whether the source device identifier or the source protocol identifier is first used for routing loop determining. Other specific implementation of this solution is the same as the solution of determining based on one of the parameters. That the first network device determines, based on the identifier information, that advertising the first route to a second network device running the second routing protocol causes a routing loop includes the following manners.

Manner 1, as an example for a better understanding: If the identifier information includes the source device identifier of the device that advertises the first route, a manner of determining whether the routing loop is caused may be as follows:
The first network device determines, based on a fact that the source device identifier includes a device identifier that is the same as a device identifier of the first network device, that advertising the first route to the second network device causes the routing loop.

Manner 2, according to the invention:
If the identifier information includes the source protocol identifier of the routing protocol to which the first route belongs, a manner of determining whether the routing loop is caused may be as follows:
The first network device determines, based on a fact that the source protocol identifier is the same as a protocol identifier of the second routing protocol run by the second network device and a route included in the second network device includes a route that has a same prefix as the first route, that advertising the first route to the second network device causes the routing loop.

Step 203: In response to a fact that the first network device determines that advertising the first route to the second network device causes the routing loop, the first network device does not advertise the first route to the second network device; or the first network device reports alarm information. The alarm information indicates that the routing loop occurs when the first network device advertises the first route to the second network device.

In a scenario to which this embodiment is applicable, alarm information (the alarm information may include information about a location at which a loop failure occurs, information about time when the loop failure occurs, and the like) may be sent in a plurality of manners. In a first manner, a network device performs routing loop determining and obtains a determining result (the determining result may be that a routing loop exists or no routing loop exists). The determining result is recorded in log information and reported to an application layer, so that information such as a location and time at which the routing loop occurs can be determined based on the log information, so as to quickly determine the routing loop failure. In a second manner, the scenario of mutual import between a plurality of protocols includes a network management device (or a network device that is in this scenario and that is set to undertaking a function of the network management device) connected to each network device. After determining that a routing loop exists, the network device reports alarm information to the network management device, so that during subsequent routing loop failure detection, loop failure related information can be determined based on the alarm information received by the network management device.

In this embodiment, the network device determines, based on a source protocol identifier or a source device identifier corresponding to a route carried in a packet, that if a routing loop may occur when the route is advertised to another protocol domain (that is, the second network device that runs the second routing protocol), the route is not advertised or alarm information is sent. According to the method provided in this embodiment of this application, a loop failure can be avoided, and impact on route learning can be avoided to a greatest extent.

In a scenario of mutual import between a plurality of protocols, if two or more network devices run the first routing protocol and the second routing protocol at the same time and mutual import (redistribute) exists between the routing protocols, when a route in the first routing protocol is imported to the second routing protocol, a loop may occur between the routing protocols. Based on this problem, because a priority of the redistributed route may be higher than that of the original route, the routing device still selects the redistributed route. As a result, route prefix overlapping (that is, a loop failure) may occur during mutual import between the protocols.

According to the method provided in this embodiment of this application, before redistributing a route, the routing device first determines, based on information (a device identifier and/or a protocol identifier) carried in the to-be-redistributed route, whether a routing loop occurs, and if the routing loop occurs, may directly give up advertising the route or generate alarm information to prompt that advertising the route may cause the routing loop, so that before advertising the route, the network device can locate the routing loop at a location or a moment at which the routing loop is caused. In this way, not advertising the route or determining information about the located routing loop facilitates subsequent routing loop failure locating, to further shorten time for loop failure detection.

In this embodiment of this application, before advertising a route, the routing device needs to use identifier information corresponding to the route to avoid a loop failure caused by mutual import between protocols. If the to-be-advertised route already has corresponding identifier information, the identifier information is directly obtained for determining. If the to-be-advertised route has no identifier information, the network device uses the to-be-advertised route to carry identifier information according to the method provided in this embodiment of this application. Because a manner of obtaining and carrying identifier information is the same as a manner of obtaining identifier information, unified descriptions are provided in this embodiment. However, when the identifier information is the source device identifier and the source protocol identifier, corresponding content is different, and manners of carrying the identifier information are also different. The following provides descriptions in detail with reference to specific parameters. Manner A: The identifier information is the source protocol identifier. Details may be as follows:
First, the source protocol identifier is determined based on a type of the routing protocol to which the first route belongs. For example, if the routing protocol to which the first route belongs is OSPF or IS-IS, route advertisement may be implemented through a process. In this embodiment, a protocol identifier may correspond to a router identifier (router-ID) of a process of the routing protocol to which the first route belongs. Specifically, the router-ID corresponding to the process may be directly used as the identifier information to be carried in the first route. If the routing protocol to which the first route belongs is BGP, because BGP has no process, an autonomous system (autonomous system, AS) number corresponding to the routing protocol to which the first route belongs may be used as the identifier information to be carried in the first route. Details may be shown in Table 1.

**Table 1**

| Type of the routing protocol to which the first route belongs | Protocol identifier | Identifier length | Identifier information |
|---|---|---|---|
| OSPF | Router-ID corresponding to the process | 4 bytes | Router-ID corresponding to the process |
| IS-IS | Router-ID corresponding to the process | 4 bytes | Router-ID corresponding to the process |
| BGP | AS number | 2 bytes/4 bytes | AS number |

A1: If the routing protocol to which the first route belongs is OSPF, the source protocol identifier is a router identifier corresponding to an OSPF process; or if the routing protocol to which the first route belongs is IS-IS, the source protocol identifier is a router identifier corresponding to an IS-IS process. An optimal and simple implementation is to directly use the router-ID corresponding to the process as the identifier information. Certainly, in this embodiment, the identifier information may alternatively be obtained after the router-ID is converted in a specific manner. There may be a plurality of specific implementations, as long as the obtained identifier information can identify the routing protocol to which the first route belongs, and another implementation is not described herein.

After determining content corresponding to the identifier information, the network device may select a plurality of manners to use the first route to carry the identifier information. In this embodiment, an optional manner is to convert the identifier information into a tag value to be carried in a tag (tag) attribute of a to-be-advertised route (that is, the first route).

In other words, if the routing protocol to which the first route belongs is OSPF or IS-IS, the identifier information is carried in a tag attribute of the first route.

After receiving the first route, the corresponding first network device may determine the identifier information (in this embodiment, the identifier information may be a router-ID corresponding to a process) carried in the first route from the tag attribute of the received first route.

A2: If the first routing protocol is BGP, the source protocol identifier is an autonomous system AS number of the first routing protocol. In an optimal and simple implementation, the AS number is directly used as the identifier information. After determining that the identifier information is the AS number, the routing device may use the first route to carry the identifier information in the following manners, and the identifier information is carried in a path attribute of an update (update) packet. Specifically, the identifier information may be carried in a route attribute (Path Attributes) of a BGP update packet in the Request for Comments (Request For Comments, RFC) 4721 Protocol. Specific implementation may be as follows:
Because each BGP route attribute has two fields: Flags and Type Code, Path Attributes in this embodiment may specifically have a structure shown in Table 2.

A value of Flags is 0x80, indicating that the attribute is an optional non-transitive (Optional non-transitive) attribute. A value of Type Code may be set to 100 (0x64), and content is 4 bytes, carrying identifier information of the BGP route.

**Table 2**

| Field name | Length | Field value |
|---|---|---|
| Flags | 1 byte | 0x80 |
| Type Code | 1 byte | Temporarily 0x64 |
| Length | 1 byte | 0x04 |
| Value | 4 bytes | Tag value |

After receiving the first route, the first network device may determine the identifier information (in this embodiment, the identifier information may be the AS number) carried in the first route from Path Attributes of the update packet corresponding to the first route.

If the first network device serves as a source device for route advertisement, the first network device may alternatively use the advertised first route to carry the identifier information in a manner corresponding to the foregoing manner. Further, after the first network device sends the packet that carries the identifier information to the second network device, the second network device may obtain the identifier information in a corresponding manner. Before the second network device re-advertises the first route, the second network device determines, based on the identifier information, whether a routing loop occurs when the first route is advertised (the determining process is the same as steps 201 to 203 in the foregoing embodiment), performs a corresponding operation based on a determining result to avoid a routing loop, and provides related location information for subsequent loop failure detection to improve efficiency of loop failure detection. In this embodiment, if the first network device receives the first route that carries the source protocol identifier, a specific implementation may be as follows:
Step 1: The first network device receives the first route, and obtains the identifier information from the first route before redistributing the first route again, where the identifier information includes the source protocol identifier.
Step 2: Determine, based on the source protocol identifier, the routing protocol to which the first route belongs. For example, in the foregoing manner A1, the identifier information is obtained based on the router-ID corresponding to the process, and correspondingly, the identifier information is restored to the router-ID corresponding to the process in this step.
Step 3: The first network device determines, based on the fact that the source protocol identifier is the same as the protocol identifier of the second routing protocol corresponding to the second network device (that is, whether a protocol identifier that is the same as the source protocol identifier exists in a protocol domain of the second routing protocol is determined) and the route included in the second network device include the route that has the same prefix as the first route, that advertising the first route to the second network device causes the routing loop. As shown in FIG. 1, the protocol domain of the second routing protocol refers to a loop range formed by the RT 4, the RT 5, the RT 6, and the RT 7. If any routing device in the RT 4, the RT 5, the RT 6, and the RT 7 stores the protocol identifier that is the same as the source protocol identifier, it is determined the protocol identifier that is the same as the source protocol identifier exists in the protocol domain of the second routing protocol.
Step 4: The first network device does not advertise the first route after determining that the routing loop occurs.
Based on manner A1, the identifier information is the protocol identifier. The following further describes in detail a method provided in embodiments of this application with reference to a specific scenario of mutual import between a plurality of protocols. The specific scenario may be as follows.
Scenario 1: Mutual import between OSPF and IS-IS (a scenario of mutual import is shown in FIG. 3) is used as an example for detailed description. Specific implementations of other mutual import are similar to implementation steps in this example. Details are not described herein again.

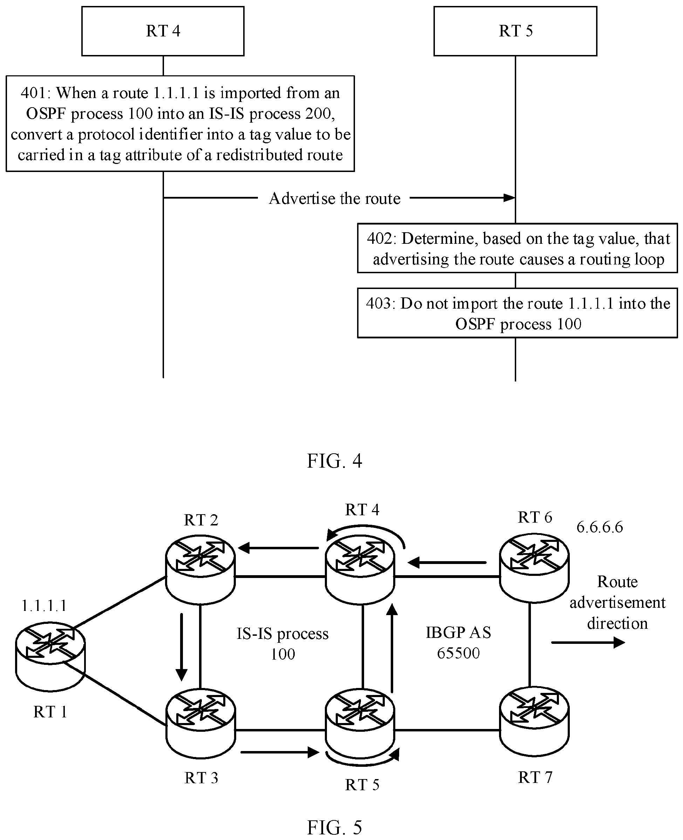

In the scenario shown in FIG. 3, a network device is a routing device. Specifically, a routing device RT 1 advertises an original route (1.1.1.1), and mutual import is performed between an OSPF process 100 and an IS-IS process 200 on an RT 4 and an RT 5. The method provided in embodiments of this application is applied to this scenario, and may include the following steps (a method procedure is shown in FIG. 4).

Step 401: When importing the route 1.1.1.1 from the OSPF process 100 into the IS-IS process 200, the RT 4 converts a protocol identifier (a router-ID of the OSPF process 100) into a tag value (the tag value corresponds to a source protocol identifier) to be carried in a tag attribute of a redistributed route.

In the scenario shown in FIG. 3, the router-ID of the OSPF process 100 is 4.4.4.4, and is converted into a tag value in a specified manner. For example, 4.4.4.4 is converted into hexadecimal 0x04040404 as the tag value. Certainly, the router-ID may alternatively be converted into the tag value in another manner, as long as the routing device can correctly obtain the corresponding router-ID through parsing after receiving the tag value.

In this embodiment, according to the route advertisement direction shown in FIG. 3, after the RT 4 imports the route 1.1.1.1 from the OSPF process 100 into the IS-IS process 200, the first route is transmitted to the RT 5 through the process 200. The RT 5 imports 1.1.1.1 into the OSPF process 100 according to a rule that is of mutual import between protocols and that is set by the RT 5.

Step 402: When the RT 5 imports the route 1.1.1.1 in the IS-IS process 200 into the OSPF process 100, the RT 5 restores the original router-ID (4.4.4.4) based on the tag value (0x04040404) carried in the route, and finds that a device with the router-ID 4.4.4.4 exists in the OSPF process 100 (the RT 4 is an existing device in the OSPF process 100), and that the OSPF process 100 already has the route 1.1.1.1 (the route 1.1.1.1 is initially imported from the process 100 into the process 200 in step 401). Based on the preceding conditions, the RT 5 determines that redistributing the route causes a routing loop.

In this embodiment, the protocol identifier (that is, the original router-ID restored from the tag value (0x04040404)) carried in the identifier information is the protocol identifier router-ID 4.4.4.4 that is of the OSPF process 100 in the routing protocol to which the first route (1.1.1.1) belongs and that is found in an IP routing table of the routing device RT 4 that advertises the first route this time.

Step 403: The RT 5 does not import 1.1.1.1 into the OSPF process 100.

Scenario 2: In many loop failure scenarios, BGP AS numbers that are set by routing devices in a loop are the same. Therefore, in embodiments of this application, it may be determined, based on the BGP AS numbers, whether a loop occurs during mutual import between protocols. Specifically, in mutual import between OSPF and BGP or mutual import between IS-IS and BGP, a routing loop may be pre-determined based on a protocol identifier carried in a route. Because specific implementation steps are similar, for brevity of description, this scenario is specifically described by using mutual import between BGP and IS-IS (a scenario of mutual import is shown in FIG. 5) as an example. Specific implementations of other mutual import are similar to implementation steps in this example. Details are not described herein again.

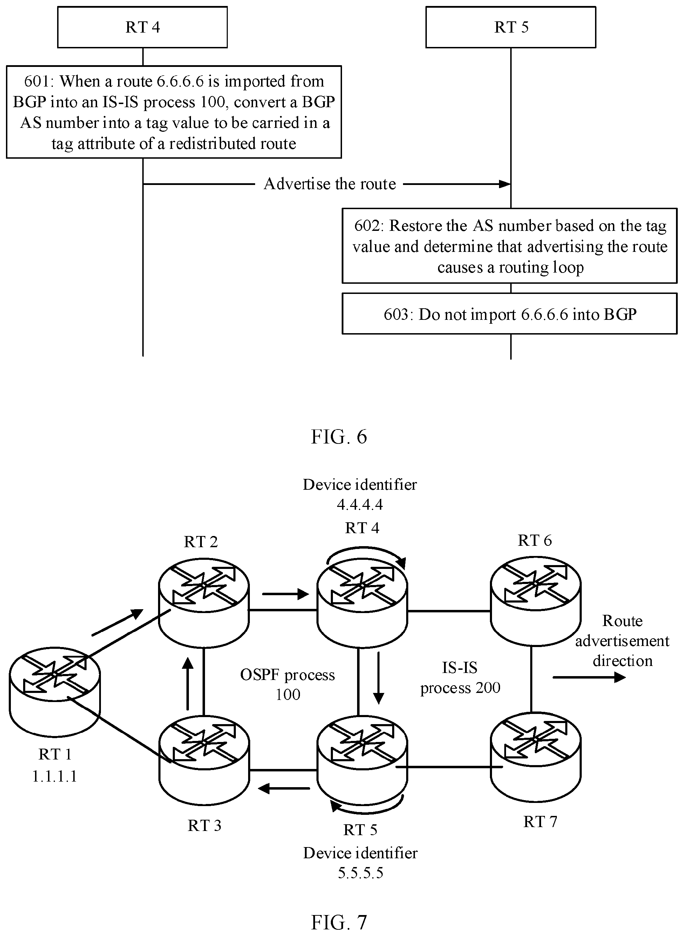

In the scenario of mutual import shown in FIG. 5, an RT 6 advertises an original route (6.6.6.6), and mutual import is performed between an IS-IS process 100 and BGP. The method provided in embodiments of this application is applied to this scenario, and may include the following steps (a method procedure is shown in FIG. 6).

Step 601: When importing the route 6.6.6.6 from BGP into the IS-IS process 100, an RT 4 converts a BGP AS number (AS number) into a tag value to be carried in a path attribute of an update (update) packet. Based on the tag value conversion principle in step 401 in the foregoing example, in this embodiment, a tag value obtained by converting the AS number may be 65500.

The AS number used as identifier information is the BGP AS number configured on the routing device RT 4 that advertises the first route (6.6.6.6) this time.

As shown in FIG. 5, according to a route advertisement direction of the process 100, the route 6.6.6.6 passes through an RT 2 and an RT 3 and reaches an RT 5. Because the RT 5 runs two different routing protocols, mutual import between the protocols is performed on the routing device. Details are as follows.

Step 602: When importing the route 6.6.6.6 in the IS-IS process 100 into BGP, the RT 5 restores the AS number based on the tag value carried in the route (in this embodiment, 65500 is restored into the corresponding AS number). The RT 5 finds that the restored AS number is the same as the BGP AS number and the route 6.6.6.6 already exists in a BGP domain. The RT 5 determines that redistributing the first route causes a routing loop.

Step 603: The RT 5 does not import 6.6.6.6 into BGP.

Manner B: The identifier information is the source device identifier. Details may be as follows:
In this embodiment, before determining, based on the identifier information, whether the route loop occurs, the first network device may obtain, from the first route, a router identifier of the device that advertises the first route. Certainly, according to different types of routing protocols, manners in which the first route carries the identifier information and carried content may also be different. Details may be shown in Table 3.

**Table 3**

| Type of a source protocol of a redistributed route | Device identifier | Identifier length | Location for carrying identifier information |
|---|---|---|---|
| OSPF | Device identifier (router-ID) | 4 bytes | Link-state advertisement LSA |
| IS-IS | Device identifier (router-ID) | 4 bytes | TLV |
| BGP | Device identifier (router-ID) | 4 bytes | Update (update) packet |

Based on the case shown in Table 3, for different types of protocols, the identifier information may be carried in the first route in the following manners. Details are as follows.

B1: If the routing protocol to which the first route belongs is Open Shortest Path First OSPF, the identifier information is carried in a link-state advertisement (link-state advertisement, LSA). Specifically, the identifier information may be carried in a type-length-value (Type Length Value, TLV) corresponding to the first route in a Type 11 link-state advertisement LSA. In this embodiment, the identifier information may be defined as a redistribute list (redistribute list) attribute in an OSPF protocol packet.

Various OSPF LSA packet headers in this embodiment may be in a format shown in the following Table 4. A part shaded with slashes in the table is an OSPF common L SA packet header, and a remaining part is content corresponding to attribute information added in embodiments of this application.

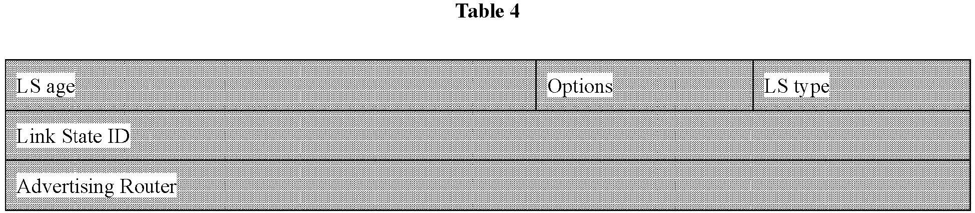

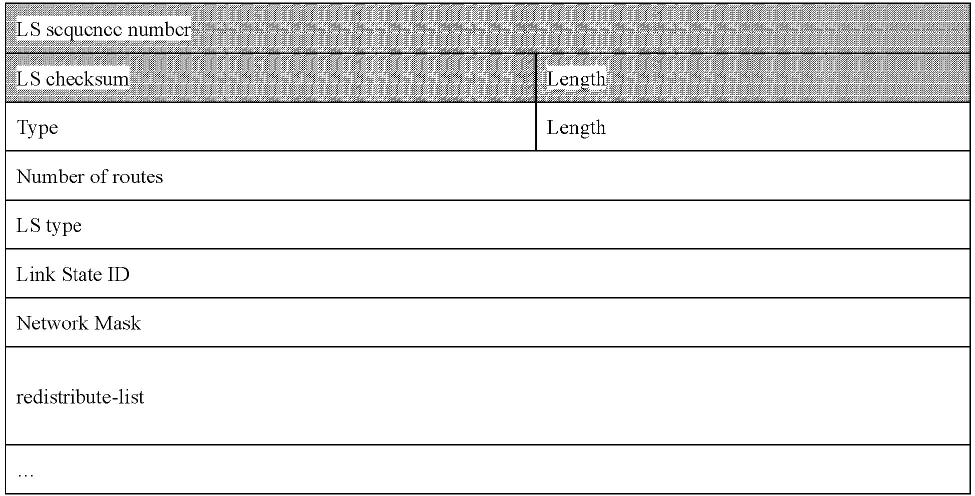

A content format and a parsing manner of the redistribute-list attribute are determined by a parameter group including four parameters: LS type (link state type), Link State ID (link state identifier), Network Mask (network mask), and redistribute-list. One parameter group corresponds to one redistributed route prefix. If there are a plurality of redistributed route prefixes, "..." in the table correspondingly carries a plurality of parameter groups that are in a one-to-one correspondence with the plurality of redistributed route prefixes. Specifically, fields included in the redistribute-list attribute may have meanings shown in the following Table 5.

**Table 5**

| Field name | Length | Field value |
|---|---|---|
| LS type | 1 byte | 11 |
| Link State ID | 4 bytes | 1.x.x.x |
| Advertising Router | 4 bytes | Router-ID of an OSPF process of a redistributed route |
| Type | 2 bytes | 1 |
| Length | 2 bytes | Actual TLV length |
| Number of routes | 4 bytes | Number of redistributed route prefixes carried in the LSA |
| LS type | 4 bytes | ASE route is 5 and NSSA route is 7 |
| Link State ID | 4 bytes | Redistributed route prefix |
| Network Mask | 4 bytes | Redistributed route mask |
| redistribute-list | 8 bytes | Two device identifiers are carried |

B2: If the routing protocol to which the first route belongs is Intermediate System to Intermediate System IS-IS, the identifier information is carried in a type-length-value TLV. In this embodiment, the identifier information may also be defined as a redistribute-list attribute in the IS-IS protocol.

The redistribute-list attribute can be placed as a sub TLV in various IS-IS prefix TLVs. The prefix TLVs specifically include:
IS-IS 135: The_Extended_IP_Reachability_TLV (RFC3784);
IS-IS 235: Multi-Topology_Reachable_IPv4_Prefixes_TLV (RFC5120);
IS-IS 236: IPv6_Reachability_TLV (RFC 5308); and
IS-IS 237: Multi-Topology_Reachable_IPv6_Prefixes_TLV (RFC5120).

Certainly, when the redistribute-list attribute is set in the IS-IS prefix TLV, specifically, fields included in the redistribute-list attribute may have meanings shown in the following Table 6.

**Table 6**

| Field name | Length | Field value |
|---|---|---|
| Sub TLV type | 1 byte | 0x0a |
| Length | 1 byte | 0x08 |
| Value | 8 bytes | Two device identifiers are carried |

B3: If the routing protocol to which the first route belongs is Border Gateway Protocol BGP, the identifier information is carried in a BGP update packet. In this embodiment, the identifier information may be defined as a redistribute-list attribute in BGP protocol route attributes.

Because each BGP route attribute has two fields: Flags and Type Code, fields included in the redistribute-list attribute used to carry the device identifier in this embodiment may have meanings shown in Table 7.

A value of Flags may be 0x80, indicating that the attribute is an optional non-transitive (Optional non-transitive) attribute.

A value of Type Code may be 110 (0x6E), and attribute content may be 8 bytes, carrying a device identifier to be indicated by the identifier information.

**Table 7**

| Field name | Length | Field value |
|---|---|---|
| Flags | 1 byte | 0x80 |
| Type Code | 1 byte | Temporarily 0x6E |
| Length | 1 byte | 0x08 |
| Value | 8 bytes | Two device identifiers are carried |

Correspondingly, if the network device receives the first route and is to re-advertise the first route (that is, before the route is re-advertised, a device with the identifier information carried in the first route needs to be determined), the network device determines whether the redistribute-list attribute exists in Path Attributes of the BGP update packet. If the redistribute-list attribute exists in the Path Attributes of the BGP update packet, a device identifier of at least one device that advertises the first route before the network device advertises the first route is obtained from the redistribute-list attribute.

In this embodiment, if the network device is used as a network device that re-advertises the first route, before the first route is re-advertised, the identifier information carried in the first route is obtained, and the source device identifier (that is, a device identifier of a network device that advertised the first route before the network device advertises the first route) carried in the identifier information is determined. Further, it is determined whether the source device identifier includes the device identifier of the first network device. If the source device identifier includes the device identifier of the first network device, it is determined that the routing loop occurs when the first route is advertised. Based on the foregoing content, in a manner in which the routing device carries the source device identifier, a manner of determining whether the source device identifier includes a device identifier of the network device may be as follows: When receiving the first route, the network device checks whether the redistribute-list carried in the route includes a device identifier (router-ID) of the network device. If the redistribute-list carried in the route includes the device identifier (router-ID) of the network device, it indicates that advertising the first route causes a routing loop. In this case, alarm information is sent.

Based on the method disclosed in the embodiment of manner B, the following further describes in detail the method provided in embodiments of this application with reference to a specific scenario of mutual import between a plurality of protocols or between a plurality of processes. The specific scenario may be as follows.

There may be mutual import scenarios such as mutual import between OSPF and IS-IS, mutual import between OSPF and BGP, and mutual import between IS-IS and BGP (certainly, in this embodiment, BGP includes a public network BGP and a private network BGP). In the foregoing cases of mutual import, a routing loop may be pre-determined based on a device identifier carried in a route. Because specific implementation steps are similar, for brevity of description, this scenario is specifically described by using mutual import between OSPF and IS-IS (a scenario of mutual import is shown in FIG. 7) as an example. Specific implementations of other mutual import are similar to implementation steps in the example. Details are not described herein again.

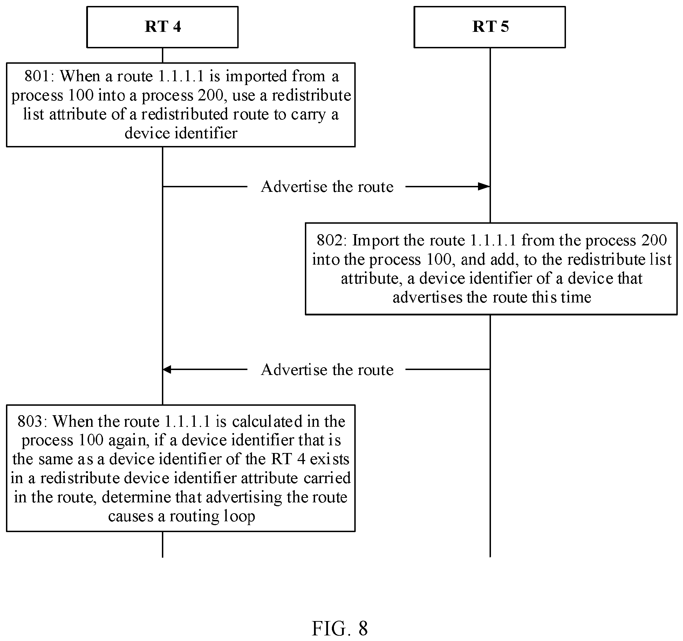

In the scenario shown in FIG. 7, an RT 1 advertises an original route (1.1.1.1), and mutual import is performed between an OSPF process 100 and an IS-IS process 200. The method provided in embodiments of this application is applied to this scenario, and may include the following steps (as shown in FIG. 8).

Step 801: An RT 4 uses a redistribute-list attribute of an advertised route to carry a router-ID (4.4.4.4) of the RT 4 when importing the route 1.1.1.1 from the OSPF process 100 into the IS-IS process 200.

As shown in FIG. 7, according to a route advertisement direction of the process 200, the route 1.1.1.1 is transmitted to an RT 5 through the process 200.

Step 802: The RT 5 imports the route 1.1.1.1 in the IS-IS process 200 into the OSPF process 100, and adds a device identifier router-ID (5.5.5.5) of a device that advertises the route 1.1.1.1 this time to the redistribute-list attribute. A redistribute-list attribute to which the device identifier is added contains 4.4.4.4 and 5.5.5.5.

According to the route advertisement direction shown in FIG. 7, in the OSPF process 100, the route 1.1.1.1 passes through an RT 3 and an RT 2 and arrives at the RT 4.

Step 803: When obtaining the route 1.1.1.1 through recalculation again in the OSPF process 100, the RT 4 parses the redistribute-ID attribute carried in the route to obtain device identifiers 4.4.4.4 and 5.5.5.5. If a router-ID that is the same as the router-ID 4.4.4.4 of the RT 4 exists, it is determined that redistributing the route causes a loop. In this case, a routing loop alarm is reported.

Certainly, based on the different manners of carrying device identifiers in different types of protocols in the foregoing manner B, for different cases of mutual import between protocols, the device router-ID may be carried in the redistribute-list attribute of the redistributed route in different manners in step 801. For ease of description, in this embodiment, attribute information carrying a device identifier in all types of protocols is defined as a redistribute-list attribute. Certainly, in a specific actual operation, the name may be adjusted. However, regardless of the name of the attribute information, in a specific implementation, a routing device may obtain, in the manner provided in the foregoing manner B, attribute information that is corresponding to each type of protocol and that can carry a device identifier. Further, when step 803 is performed in this embodiment, the device identifier carried in the attribute information may be obtained through parsing based on a generation manner of the attribute information.

In embodiments of this application, for the purpose of more accurately determining whether a routing loop occurs after a route is advertised, the network device may further determine a routing loop by combining two factors: a protocol identifier and a source device identifier. A specific implementation may be as follows.

Before advertising a first route, the network device determines identifier information carried in the first route. The identifier information indicates a source device identifier of a device that advertises the first route before the routing device redistributes the first route and a source protocol identifier of a routing protocol to which the first route belongs. In other words, the identifier information includes the source protocol identifier and the source device identifier. Then, the routing device first determines, according to the method provided in the foregoing manner 2 (using a protocol identifier), whether a routing loop occurs when the first route is redistributed. If it is determined that the routing loop occurs, the routing device does not advertise the first route or sends alarm information. If it is determined that the routing loop does not occur, according to the method provided in the foregoing manner 1 (using a source device identifier), whether a routing loop occurs when the first route is advertised. If the routing loop occurs, the routing device does not advertise the first route or sends alarm information, or if the routing loop does not occur, the routing device advertises the first route.

Certainly, the foregoing implementation instance is only a combination of the foregoing manner 1 and manner 2. In a specific using instance, whether a routing loop occurs after the first route is redistributed may be first determined based on a device identifier, and then re-confirmation is performed based on a protocol identifier. A specific sequence of using manner 1 and manner 2 together is not limited in embodiments of this application. The routing device can more accurately determine, by combining manner 1 and manner 2, whether redistributing a route causes a routing loop when redistributing the route. This improves an identification rate of a routing loop.

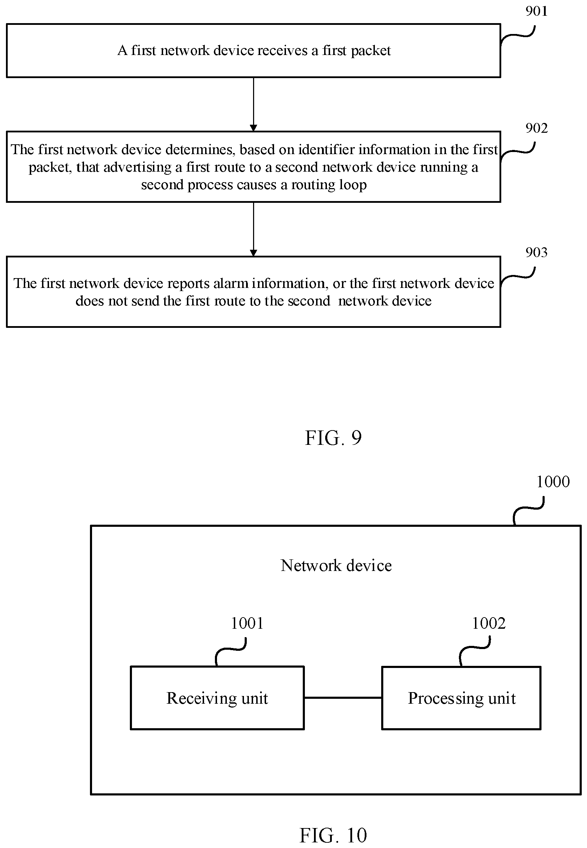

Another embodiment provides a routing loop reduction method. In the method provided in this embodiment, a first network device is a device running a plurality of processes. The method includes the following steps (as shown in FIG. 9).

Step 901: The first network device receives a first packet. The first packet carries identifier information and a first route, and the identifier information includes a source device identifier of a device that advertises the first route or a source protocol identifier of a routing protocol to which the first route belongs. The first network device runs a first process and a second process, and the first process is different from the second process.

The source protocol identifier may be a protocol identifier found in an IP routing table of a network device that advertises the first route this time.

Step 902: The first network device determines, based on the identifier information, that advertising the first route to a second network device running the second process causes a routing loop.

In this embodiment, based on different identifier information (which may be a source device identifier or a source protocol identifier), that the first network device determines, based on the identifier information, that advertising the first route to a second network device running the second process causes a routing loop may be specifically implemented as follows.
1. According to an example for a better understanding, the first network device determines, based on a fact that the source device identifier includes a device identifier that is the same as a device identifier of the first network device, that advertising the first route to the second network device causes the routing loop.
2. According to this application, the first network device determines, based on a fact that the source protocol identifier is the same as a protocol identifier corresponding to the second process run by the second network device and a route included in the second network device includes a route that has a same prefix as the first route, that advertising the first route to the second network device causes the routing loop.

Step 903: In response to a fact that the first network device determines that advertising the first route to the second network device causes the routing loop, the first network device does not advertise the first route to the second network device; or the first network device reports alarm information. The alarm information indicates that the routing loop occurs when the first network device advertises the first route to the second network device.

The identifier information corresponds to the source device identifier or the source protocol identifier, and in this example, the source protocol identifier and the source device identifier correspond to different content and different carrying manners. A specific implementation may be as follows.

In the conventional technology, processes exist in routing protocols OSPF and IS-IS, but no process exists in BGP. Therefore, the method in this embodiment is applicable to the protocols OSPF and IS-IS. Specific implementations of generating and carrying identifier information may be as follows:
(1) The identifier information is a protocol identifier. If the routing protocol to which the first route belongs is OSPF, the source protocol identifier is a router identifier corresponding to an OSPF process.
   If the routing protocol to which the first route belongs is IS-IS, the source protocol identifier is a router identifier corresponding to an IS-IS process.
   Correspondingly, a manner in which the identifier information is carried in the first route may be: The identifier information is carried in a tag (tag) attribute of the first route.
(2) The identifier information is a device identifier. If the routing protocol to which the first route belongs is Open Shortest Path First OSPF or Intermediate System to Intermediate System IS-IS, the source device identifier is a router identifier of the device that advertises the first route.

Correspondingly, the identifier information may be carried in the following manners:
If the routing protocol to which the first route belongs is Open Shortest Path First OSPF, the identifier information is carried in a link-state advertisement LSA.

If the routing protocol to which the first route belongs is Intermediate System to Intermediate System IS-IS, the identifier information is carried in a type-length-value TLV

Because the process-based routing loop determining provided in the embodiment of FIG. 9 is similar to the foregoing routing protocol-based determining manner, details of the method provided in the implementation shown in FIG. 9 and details of the methods in the embodiments shown in FIG. 2 to FIG. 8 may be described with reference to each other, and processing processes of obtaining and carrying the identifier information are the same. Therefore, for various implementation details of this embodiment, refer to the solutions provided in the foregoing embodiments. Details are not described herein again.

As shown in FIG. 10, an embodiment of this application further provides a schematic diagram of a possible structure of a network device. The network device 1000 may implement functions of the first network device in FIG. 2. For functions of units in the network device, refer to the descriptions in the foregoing method steps.

The network device 1000 may include the following functional structure modules:
a receiving unit 1001, configured to receive a first packet, where the first packet carries identifier information and a first route, the identifier information includes a source device identifier of a device that advertises the first route or a source protocol identifier of a routing protocol to which the first route belongs, the network device runs a first routing protocol and a second routing protocol, and the first routing protocol is different from the second routing protocol, and
a processing unit 1002, configured to: determine, based on the identifier information, that advertising the first route to a second network device running the second routing protocol causes a routing loop; and determine not to advertise the first route to the second network device; or report alarm information, where the alarm information indicates that the routing loop occurs when the first network device advertises the first route to the second network device.

Because the identifier information may be the source device identifier and/or the source protocol identifier, specific implementations for the two different types of identifier information in this embodiment may be as follows:
When the identifier information is the source device identifier, the processing unit 1002 is specifically configured to determine, according to an example for a better understanding, based on a fact that the source device identifier includes a device identifier that is the same as a device identifier of the first network device, that advertising the first route to the second network device causes the routing loop.

Further, if the routing protocol to which the first route belongs is Open Shortest Path First OSPF, Border Gateway Protocol BGP, or Intermediate System to Intermediate System IS-IS, the source device identifier is a router identifier of the device that advertises the first route.

In an instance in which the identifier information is the source device identifier, the identifier information may be carried in the following manners:
If the routing protocol to which the first route belongs is Open Shortest Path First OSPF, the identifier information is carried in a link-state advertisement LSA.

If the routing protocol to which the first route belongs is Intermediate System to Intermediate System IS-IS, the identifier information is carried in a type-length-value TLV

If the routing protocol to which the first route belongs is Border Gateway Protocol BGP, the identifier information is carried in a BGP update packet.

When the identifier information is the source protocol identifier, the processing unit 1002 is specifically configured to determine, according to this application, based on a fact that the source protocol identifier is the same as a protocol identifier of the second routing protocol run by the second network device and a route included in the second network device includes a route that has a same prefix as the first route, that advertising the first route to the second network device causes the routing loop.

Further, if the routing protocol to which the first route belongs is OSPF, the source protocol identifier is a router identifier corresponding to an OSPF process.

If the routing protocol to which the first route belongs is IS-IS, the source protocol identifier is a router identifier corresponding to an IS-IS process.

If the first routing protocol is BGP, the source protocol identifier is an autonomous system AS number of the first routing protocol.

In an instance in which the identifier information is the source protocol identifier, the identifier information may be carried in the following manners:
If the routing protocol to which the first route belongs is OSPF or IS-IS, the identifier information is carried in a tag attribute of the first route.

If the routing protocol to which the first route belongs is BGP, the identifier information is carried in a path attribute of an update packet.

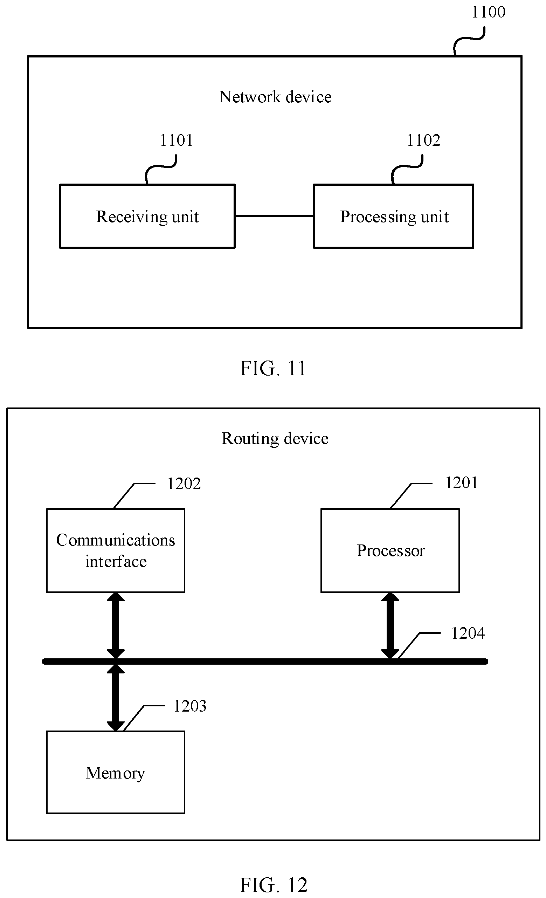

As shown in FIG. 11, an embodiment of this application further provides a schematic diagram of a possible structure of another network device. The network device 1100 may implement functions of the RT 5 in FIG. 4, FIG. 6, and FIG. 8 and the functions of the first network device in FIG. 9. For functions of units in the network device, refer to the descriptions in the foregoing method steps.

The network device 1100 includes a receiving unit 1101 and a processing unit 1102.

The receiving unit 1101 is configured to receive a first packet. The first packet carries identifier information and a first route, and the identifier information includes a source device identifier of a device that advertises the first route or a source protocol identifier of a routing protocol to which the first route belongs. The first network device runs a first process and a second process, and the first process is different from the second process.

The processing unit 1102 is configured to: determine, based on the identifier information, that advertising the first route to a second network device running the second process causes a routing loop; and determine not to advertise the first route to the second network device; or report alarm information, where the alarm information indicates that the routing loop occurs when the first network device advertises the first route to the second network device.

Because the identifier information may be the source device identifier and/or the source protocol identifier, specific implementations for the two different types of identifier information in this embodiment may be as follows:
When the identifier information is the source device identifier, the processing unit 1102 is specifically configured to determine, as an example for a better understanding, based on a fact that the source device identifier includes a device identifier that is the same as a device identifier of the first network device, that advertising the first route to the second network device causes the routing loop.

Further, if the routing protocol to which the first route belongs is Open Shortest Path First OSPF or Intermediate System to Intermediate System IS-IS, the source device identifier is a router identifier of the device that advertises the first route.

In an instance in which the identifier information is the source device identifier, the identifier information may be carried in the following manners:
If the routing protocol to which the first route belongs is Open Shortest Path First OSPF, the identifier information is carried in a link-state advertisement LSA.

If the routing protocol to which the first route belongs is Intermediate System to Intermediate System IS-IS, the identifier information is carried in a type-length-value TLV

When the identifier information is the source protocol identifier, the processing unit 1102 is specifically configured to determine, according to this application, based on a fact that the source protocol identifier is the same as a protocol identifier corresponding to the second process run by the second network device and a route included in the second network device includes a route that has a same prefix as the first route, that advertising the first route to the second network device causes the routing loop.

Further, if the routing protocol to which the first route belongs is OSPF, the source protocol identifier is a router identifier corresponding to an OSPF process.

If the routing protocol to which the first route belongs is IS-IS, the source protocol identifier is a router identifier corresponding to an IS-IS process.

In an instance in which the identifier information is the source device identifier, the identifier information may be carried in the following manner:
If the routing protocol to which the first route belongs is OSPF or IS-IS, the identifier information is carried in a tag attribute of the first route.

Division into modules in embodiments of this application is an example, and is merely logical function division. During actual implementation, there may be another division manner. In addition, functional modules in embodiments of this application may be integrated into one processing unit, or each of the modules may exist alone physically, or two or more modules may be integrated into one module. The integrated module may be implemented in a form of hardware, or may be implemented in a form of a software functional module.

When the integrated module may be implemented in the form of hardware, the network device may be of a structure shown in FIG. 12, and the processing units provided in FIG. 10 and FIG. 11 may correspond to a processor 1201 in FIG. 12. The processor 1201 may be a central processing unit (central processing unit, CPU), an application-specific integrated circuit (application-specific integrated circuit, ASIC), or one or more integrated circuits configured to implement embodiments of this application, for example, one or more digital signal processors (digital signal processor, DSP), or one or more field programmable gate arrays (field programmable gate array, FPGA). The network device may further include a communications interface 1202, and the communications interface 1202 is configured to communicate with another network device. The network device further includes a memory 1203, configured to store a program executed by the processor 1201. The memory 1203 may be a volatile memory (volatile memory), for example, a random-access memory (random-access memory, RAM); may be a non-volatile memory (non-volatile memory), for example, a read-only memory (read-only memory, ROM), a flash memory (flash memory), a hard disk drive (hard disk drive, HDD), or a solid-state drive (solid-state drive, SSD); or may be a combination of the foregoing types of memories. The memory 1203 is configured to store program code that can implement the method in this application, a configuration file of a network device in a TSN domain, or other content. The memory 1203 is any other medium that can be configured to carry or store expected program code in a form of instructions or a data structure and that can be accessed by a computer, but is not limited thereto.

The processor 1201 is configured to execute the program code stored in the memory 1203. In this embodiment of this application, a specific connection medium between the communications interface 1202, the processor 1201, and the memory 1203 is not limited. According to this embodiment of this application, in FIG. 12, the memory 1203, the processor 1201, and the communications interface 1202 are connected to each other by using a bus 1204. The bus is represented by using a bold line in FIG. 12. A manner of connection between other components is merely an example for description, but is not used as a limitation. The bus may be classified into an address bus, a data bus, a control bus, and the like. For ease of representation, only one bold line is used to represent the bus in FIG. 12, but this does not mean that there is only one bus or only one type of bus.

In an example, the communications interface 1202 is configured to receive a first packet. The first packet carries identifier information and a first route, and the identifier information includes a source device identifier of a device that advertises the first route or a source protocol identifier of a routing protocol to which the first route belongs. The first network device runs a first routing protocol and a second routing protocol, and the first routing protocol is different from the second routing protocol.

The processor 1201 is configured to determine, based on the identifier information, that advertising the first route to a second network device running the second routing protocol causes a routing loop.

The processor 1201 is configured to: in response to determining that advertising the first route to the second network device causes the routing loop, skip advertising the first route to the second network device.

Alternatively, the processor 1201 is configured to: in response to determining that advertising the first route to the second network device causes the routing loop, report alarm information, where the alarm information indicates that the routing loop occurs when the first network device advertises the first route to the second network device.

In an example, the communications interface 1202 is configured to receive a first packet. The first packet carries identifier information and a first route, and the identifier information includes a source device identifier of a device that advertises the first route or a source protocol identifier of a routing protocol to which the first route belongs. The first network device runs a first process and a second process, and the first process is different from the second process. The processor 1201 is configured to determine, based on the identifier information, that advertising the first route to a second network device running the second process causes a routing loop.

The processor 1201 is configured to: in response to determining that advertising the first route to the second network device causes the routing loop, skip advertising the first route to the second network device.

Alternatively, the processor 1201 is configured to: in response to determining that advertising the first route to the second network device causes the routing loop, report alarm information, where the alarm information indicates that the routing loop occurs when the first network device advertises the first route to the second network device.

The network device 1200 may implement functions of the RT 5 in FIG. 4, FIG. 6, and FIG. 8, and functions of the first network device in FIG. 2 and FIG. 9. For details, refer to descriptions of methods related to the accompanying drawings.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

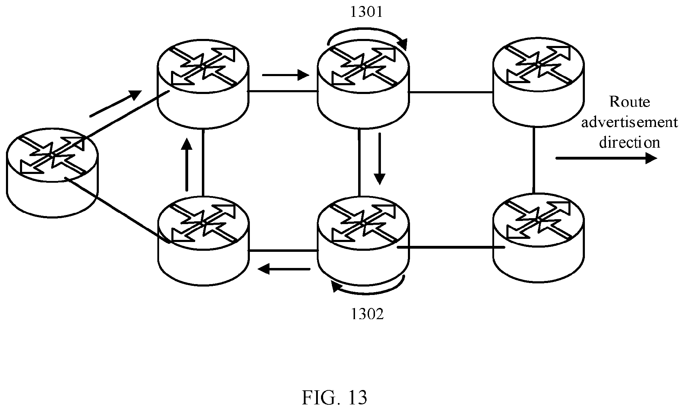

As shown in FIG. 13, an embodiment of this application further provides a routing loop reduction system. The system includes a network device used in a scenario of mutual route import between a plurality of protocols or between a plurality of processes, and the system includes at least a first network device 1301 and a second network device 1302. The first network device runs a first routing protocol and a second routing protocol, and the first routing protocol is different from the second routing protocol.

The second network device 1302 is configured to add identifier information to a first packet and send the first packet. The first network device 1301 is configured to: receive the first packet, where the first packet carries the identifier information and a first route, and the identifier information includes a source device identifier of a device that advertises the first route or a source protocol identifier of a routing protocol to which the first route belongs; determine, based on the identifier information, that advertising the first route to the second network device running the second routing protocol causes a routing loop; and in response to a fact that the first network device determines that advertising the first route to the second network device causes the routing loop, determine not to advertise the first route to the second network device; or report alarm information, where the alarm information indicates that the routing loop occurs when the first network device advertises the first route to the second network device.

The foregoing is a scenario based on mutual import between routing protocols. In a scenario of mutual import between processes, the first network device 1301 may run a first process and a second process, and the first process is different from the second process.

The second network device 1302 is configured to add identifier information to a first packet and send the first packet. The first network device 1301 is configured to: receive the first packet, where the first packet carries the identifier information and a first route, and the identifier information includes a source device identifier of a device that advertises the first route or a source protocol identifier of a routing protocol to which the first route belongs; determine, based on the identifier information, that advertising the first route to the second network device running the second process causes a routing loop; and in response to a fact that the first network device determines that advertising the first route to the second network device causes the routing loop, determine not to advertise the first route to the second network device; or report alarm information, where the alarm information indicates that the routing loop occurs when the first network device advertises the first route to the second network device.

The network device in the system performs routing loop determining based on the manners provided in the foregoing embodiments. Specific implementation is not described herein again.

Further, the system may include a network management device 1303, configured to receive the alarm information.

In this embodiment, the network management device may be connected to each network device in this scenario, or may be connected to only several network devices. The network management device may be a network management device that is independent of the network device in this scenario. In this case, when sending the alarm information, the network device sends the alarm information to the network management device.

Certainly, in this implementation, the network management device may alternatively be a network device in this scenario that undertakes a function of the network management device. After determining that a routing loop exists, another network device having no network management function reports alarm information to the network device having the network management function.

The alarm information is reported, so that loop failure information can be directly determined on the network management device during loop failure detection after a loop failure occurs. This shortens a detection latency.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or the processor of any other programmable data processing device generate an apparatus for implementing a specific function in one or more processes in the flowcharts and/or in one or more blocks in the block diagrams.

These computer program instructions may be saved in a computer-readable memory that can indicate the computer or any other programmable data processing device to work in a specific manner, so that the instructions saved in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

## Claims

1. A routing loop reduction method, wherein the method comprises:
receiving, by a first network device, a first packet, wherein the first packet carries identifier information and a first route, the identifier information comprises a source device identifier of a device that advertises the first route or a source protocol identifier of a routing protocol to which the first route belongs, the first network device runs a first routing protocol and a second routing protocol, the first routing protocol is different from the second routing protocol, and mutual route import is performed between the first routing protocol and the second routing protocol;
determining, by the first network device based on the identifier information, that advertising the first route to a second network device running the second routing protocol causes a routing loop, wherein the determining, by the first network device based on the identifier information, that advertising the first route to a second network device running the second routing protocol causes a routing loop comprises: determining, by the first network device based on a fact that the source protocol identifier is the same as a protocol identifier of the second routing protocol run by the second network device and a route comprised in the second network device comprises a route that has a same prefix as the first route, that advertising the first route to the second network device causes the routing loop; and
in response to a fact that the first network device determines that advertising the first route to the second network device causes the routing loop, skipping advertising, by the first network device, the first route to the second network device; or reporting, by the first network device, alarm information, wherein the alarm information indicates that the routing loop occurs when the first network device advertises the first route to the second network device.

2. The method according to claim 1, wherein if the routing protocol to which the first route belongs is OSPF, the source protocol identifier is a router identifier corresponding to an OSPF process;
if the routing protocol to which the first route belongs is IS-IS, the source protocol identifier is a router identifier corresponding to an IS-IS process; or
if the first routing protocol to which the first route belongs is BGP, the source protocol identifier is an autonomous system AS number of the first routing protocol.

3. The method according to claim 1 or 2, wherein if the routing protocol to which the first route belongs is OSPF or IS-IS, the identifier information is carried in a tag attribute of the first route; or
if the routing protocol to which the first route belongs is BGP, the identifier information is carried in a path attribute of an update packet.

4. A network device, wherein the network device is configured to implement the method according to any one of the claims 1-3.

5. A computer-readable storage medium comprising instructions, and when the instructions are run on a network device, the network device is enabled to perform the method according to any one of claims 1-3.

## Patentansprüche

1. Verfahren zum Reduzieren von Routing-Schleifen, wobei das Verfahren Folgendes umfasst:
Empfangen, durch eine erste Netzwerkvorrichtung, eines ersten Pakets, wobei das erste Paket Identifikatorinformationen und eine erste Route trägt, die Identifikatorinformationen einen Quellvorrichtungs-Identifikator einer Vorrichtung, die die erste Route ankündigt, oder einen Quellprotokoll-Identifikator eines Routing-Protokolls, zu dem die erste Route gehört, umfassen, die erste Netzwerkvorrichtung ein erstes Routing-Protokoll und ein zweites Routing-Protokoll ausführt, das erste Routing-Protokoll sich von dem zweiten Routing-Protokoll unterscheidet, und ein gegenseitiger Routenimport zwischen dem ersten Routing-Protokoll und dem zweiten Routing-Protokoll durchgeführt wird;
Bestimmen, durch die erste Netzwerkvorrichtung basierend auf den Identifikatorinformationen, dass ein Ankündigen der ersten Route an eine zweite Netzwerkvorrichtung, die das zweite Routing-Protokoll ausführt, eine Routing-Schleife verursacht, wobei das Bestimmen, durch die erste Netzwerkvorrichtung basierend auf den Identifikatorinformationen, dass das Ankündigen der ersten Route an eine zweite Netzwerkvorrichtung, die das zweite Routing-Protokoll ausführt, eine Routing-Schleife verursacht, umfasst:
Bestimmen, durch die erste Netzwerkvorrichtung basierend auf einer Tatsache, dass der Quellprotokoll-Identifikator gleich wie ein Protokoll-Identifikator des zweiten Routing-Protokolls ist, das durch die zweite Netzwerkvorrichtung ausgeführt wird, und eine Route, die in der zweiten Netzwerkvorrichtung umfasst ist, eine Route umfasst, die ein gleiches Präfix wie die erste Route aufweist, dass das Ankündigen der ersten Route an die zweite Netzwerkvorrichtung die Routing-Schleife verursacht; und
als Reaktion auf eine Tatsache, dass die erste Netzwerkvorrichtung bestimmt, dass das Ankündigen der ersten Route an die zweite Netzwerkvorrichtung die Routing-Schleife verursacht, Überspringen des Ankündigens, durch die erste Netzwerkvorrichtung, der ersten Route an die zweite Netzwerkvorrichtung; oder Melden, durch die erste Netzwerkvorrichtung, von Alarminformationen, wobei die Alarminformationen angeben, dass die Routing-Schleife auftritt, wenn die erste Netzwerkvorrichtung die erste Route an die zweite Netzwerkvorrichtung ankündigt.

2. Verfahren nach Anspruch 1, wobei, wenn das Routing-Protokoll, zu dem die erste Route gehört, OSPF ist, der Quellprotokoll-Identifikator ein Router-Identifikator ist, der einem OSPF(Open Shortest Path First)-Prozess entspricht;
wenn das Routing-Protokoll, zu dem die erste Route gehört, IS-IS ist, der Quellprotokoll-Identifikator ein Router-Identifikator ist, der einem IS-IS(Intermediate System to Intermediate System)-Prozess entspricht; oder
wenn das erste Routing-Protokoll, zu dem die erste Route gehört, BGP ist, der Quellprotokoll-Identifikator eine autonome System-AS(autonomous system)-Nummer des ersten Routing-Protokolls ist.

3. Verfahren nach Anspruch 1 oder 2, wobei, wenn das Routing-Protokoll, zu dem die erste Route gehört, OSPF oder IS-IS ist, die Identifikatorinformationen in einem Tag-Attribut der ersten Route getragen werden; oder
wenn das Routing-Protokoll, zu dem die erste Route gehört, BGP ist, die Identifikatorinformationen in einem Pfad-Attribut eines Update-Pakets getragen werden.

4. Netzwerkvorrichtung, wobei die Netzwerkvorrichtung konfiguriert ist, um das Verfahren nach einem der Ansprüche 1-3 zu implementieren.

5. Computerlesbares Speichermedium, das Anweisungen umfasst, und wenn die Anweisungen auf einer Netzwerkvorrichtung ausgeführt werden, die Netzwerkvorrichtung befähigt wird, das Verfahren nach einem der Ansprüche 1-3 durchzuführen.

## Revendications

1. Procédé de réduction de boucle de routage, dans lequel le procédé comprend :
la réception, par un premier dispositif réseau, d'un premier paquet, dans lequel le premier paquet transporte des informations d'identifiant et une première route, les informations d'identifiant comprennent un identifiant de dispositif source d'un dispositif qui fait la publicité de la première route ou un identifiant de protocole source d'un protocole de routage auquel appartient la première route, le premier dispositif réseau exécute un premier protocole de routage et un second protocole de routage, le premier protocole de routage est différent du second protocole de routage, et une importation de route mutuelle est réalisée entre le premier protocole de routage et le second protocole de routage ;
la détermination, par le premier dispositif réseau en fonction des informations d'identifiant, que la publicité de la première route à un second dispositif réseau exécutant le second protocole de routage provoque une boucle de routage, dans lequel la détermination, par le premier dispositif réseau en fonction des informations d'identifiant, que la publicité de la première route à un second dispositif réseau exécutant le second protocole de routage provoque une boucle de routage comprend : la détermination, par le premier dispositif réseau, en fonction du fait que l'identifiant de protocole source est identique à un identifiant de protocole du second protocole de routage exécuté par le second dispositif réseau et qu'une route comprise dans le second dispositif réseau comprend une route ayant le même préfixe que la première route, que la publicité de la première route au second dispositif réseau provoque la boucle de routage ; et
en réponse au fait que le premier dispositif réseau détermine que la publicité de la première route au second dispositif réseau provoque la boucle de routage, le fait d'omettre la publicité, par le premier dispositif réseau, de la première route au second dispositif réseau ; ou la signalisation, par le premier dispositif réseau, d'informations d'alarme, dans lequel les informations d'alarme indiquent que la boucle de routage se produit lorsque le premier dispositif réseau fait la publicité de la première route au second dispositif réseau.

2. Procédé selon la revendication 1, dans lequel si le protocole de routage auquel appartient la première route est OSPF, l'identifiant de protocole source est un identifiant de routeur correspondant à un processus OSPF ;
si le protocole de routage auquel appartient la première route est IS-IS, l'identifiant de protocole source est un identifiant de routeur correspondant à un processus IS-IS ; ou
si le premier protocole de routage auquel appartient la première route est BGP, l'identifiant de protocole source est un numéro AS de système autonome du premier protocole de routage.

3. Procédé selon la revendication 1 ou 2, dans lequel si le protocole de routage auquel appartient la première route est OSPF ou IS-IS, les informations d'identifiant sont transportées dans un attribut d'étiquette de la première route ; ou
si le protocole de routage auquel appartient la première route est BGP, les informations d'identifiant sont transportées dans un attribut de chemin d'un paquet de mise à jour.

4. Dispositif réseau, dans lequel le dispositif réseau est configuré pour mettre en œuvre le procédé selon l'une quelconque des revendications 1 à 3.

5. Support de stockage lisible par ordinateur comprenant des instructions, et lorsque les instructions sont exécutées sur un dispositif réseau, le dispositif réseau est activé pour réaliser le procédé selon l'une quelconque des revendications 1 à 3.
